# EUROPÄISCHE PATENTANMELDUNG

(11) **EP 1 291 757 A2**
(43) Veröffentlichungstag der Anmeldung: **12.03.2003**
(21) Anmeldenummer: 02019141.7
(22) Anmeldetag: 30.08.2002
(51) Int. Cl.: G06F 3/12

(54) **Bilderzeugungssystem mit einer grafischen Benutzerschnittstelle zur Darstellung von Druckoptionen**

(30) Priorität: 05.09.2001 US 317674 P; 05.09.2001 US 317535 P
(71) Anmelder: Heidelberger Druckmaschinen Aktiengesellschaft, 69115 Heidelberg (DE)
(72) Erfinder: Holzwarth, Robert K., Palmyra, NY 14522 (US); Kremer, Karl-Heinz, Rochester, NY 14624 (US)
(74) Vertreter: Franzen, Peter

(57) **Zusammenfassung**

Die Erfindung betrifft ein Bilderzeugungsvorrichtung und ein Verfahren zur Darstellung von Druckoptionen an einer grafischen Benutzerschnittstelle (110) einer Bilderzeugungsvorrichtung (100). Dabei umfasst ein Bilderzeugungssystem (100) eine grafische Benutzerschnittstelle (GUI) (110), die auf eine Bilderzeugungsmanagementfunktionalität und eine Dokumentmanagementfunktionalität reagiert. Die Bilderzeugungsmanagementfunktionalität und die Dokumentmanagementfunktionalität ermöglichen eine Darstellung von Druckoptionen eines Druckauftrags auf Seitenebene. Die Darstellung der Druckoption umfasst mindestens ein grafisches Bild der ausgewählten bzw. jeder Seite zugeordneten Seitenoption. Die graphischen Bilder sind als Icon und/oder als die Seitenoption zeigendes Thumbnail ausgebildet.

## Beschreibung

Die vorliegende Erfindung betrifft den Bereich von Bilderzeugungssystemen mit einer grafischen Benutzerschnittstelle. Insbesondere betrifft die Erfindung Bilderzeugungsvorrichtungen und -verfahren mit einer grafischen Benutzerschnittstelle, welche die Darstellung von Druckoptionen eines Druckauftrags auf Seitenebene ermöglicht.

Eine Bilderzeugungsvorrichtung überträgt Bilder von Vorlagen auf Papier oder ein anderes Medium, um ein fertiges Produkt, z.B. eine Broschüre, ein Faltblatt oder ein Notizbuch mit Register herzustellen. Die Vorlage kann in gedruckter Form (auf Papier oder einem anderen Medium) oder elektronisch vorliegen (auf einer Diskette, einer CD u.ä.) oder aber über ein Netzwerk wie z.B. das Internet übermittelt werden. Ein "Druckauftrag" setzt sich zusammen aus den Vorlagen und den Anweisungen zur Herstellung des fertigen Produkts.

Viele Bilderzeugungsvorrichtungen verfügen über eine grafische Benutzerschnittstelle (graphical user interface, GUI) zur visuellen Darstellung und Steuerung der Bildübertragung eines Druckauftrags. Die GUI ermöglicht die Erzeugung und Veränderung von Beziehungen und Zuordnungen zwischen verschiedenen Komponenten der Bilderzeugungsvorrichtung und dem Druckauftrag. Diese Beziehungen und Zuordnungen sind z.B. mittels eines hierarchischen Ansatzes darstellbar, z.B. in Form einer Baumstruktur oder einer Dateiordnerstruktur oder einer anderen Art der Visualisierung.

Die Anweisungen für einen Druckauftrag umfassen Druckoptionen für den gesamten Druckauftrag und Seitenoptionen für spezifische Seiten des Druckauftrags. Die Seitenoptionen stellen eine Ausnahme bezüglich der dem gesamten Druckauftrag zugeordneten Druckoptionen dar. Die Druck- und Seitenoptionen bestimmen z.B. die Papier- bzw. Medienart (Farbe, Format, Register usw.), Heftpositionen, Lochungen, Bildverschiebungen, Falzvorgänge, versetztes Stapeln, zu bedruckende Seiten, Kantenbeschnitt, Drehung usw. Die GUI zeigt normalerweise eine Liste von Symbolen oder Icons an, die eine Zusammenfassung der Seitenoptionen darstellen. Die Icons zeigen in der Regel an, dass einer Seite Seitenoptionen zugewiesen sind, geben jedoch die spezifischen Optionen der Seite nicht wieder. Gemäß einem Ansatz wird ein Icon angezeigt, das eine Seite mit Register kennzeichnet, jedoch keine weiteren Seitenoptionen. Um mehr Informationen über die spezifischen Seitenoptionen zu erhalten, muss ein Benutzer normalerweise die Eigenschaften jeder Seite öffnen und überprüfen. Außerdem werden die Icons in der Regel zugewiesen, wenn der Druckauftrag zusammengestellt wird, und können nicht verändert werden, wenn ein Benutzer neue Seitenoptionen zuweist.

Die vorliegende Erfindung schafft ein Bilderzeugungssystem mit einer grafischen Benutzerschnittstelle, die eine Darstellung von Druckoptionen eines Druckauftrags auf Seitenebene ermöglicht. Die Darstellung der Druckoptionen umfasst mindestens eine grafische Darstellung der für jede einzelne Seite gewählten oder einer entsprechenden Seite zugeordneten Seitenoptionen. Die grafischen Darstellungen umfassen die Seitenoptionen wiedergebende Icons oder Thumbnails für die Seite.

Gemäß einem Aspekt umfasst die Bilderzeugungsvorrichtung eine grafische Benutzerschnittstelle mit einer Bilderzeugungsmanagementfunktionalität und einer Dokumentmanagementfunktionalität. Die Bilderzeugungs- und Dokumentmanagementfunktionalität liefern mindestens eine grafische Darstellung in Reaktion auf eine Druckoption für einen Druckauftrag.

In einem ersten Verfahren zur Darstellung der Druckoptionen an einer grafischen Benutzerschnittstelle einer Bilderzeugungsvorrichtung werden eine oder mehrere Seiten eines Druckauftrags angewählt. Den Seiten werden eine oder mehrere Seitenoptionen zugewiesen. In Reaktion auf die mindestens eine Seitenoption wird ein Icon erzeugt. Das Icon wird den Seiten des Druckauftrags zugeordnet.

In einem zweiten Verfahren zur Darstellung der Druckoptionen an einer grafischen Benutzerschnittstelle einer Bilderzeugungsvorrichtung werden eine oder mehrere Seiten eines Druckauftrags angewählt. Den Seiten werden eine oder mehrere Seitenoptionen zugewiesen. Aus einer Liste vorgegebener Icons wird in Reaktion auf die Seitenoptionen ein Icon ausgewählt. Das Icon wird den Seiten des Druckauftrags zugeordnet.

In einem dritten Verfahren zur Darstellung der Druckoptionen an einer grafischen Benutzerschnittstelle einer Bilderzeugungsvorrichtung werden eine oder mehrere Seiten eines Druckauftrags angewählt. Den Seiten werden eine oder mehrere Seitenoptionen zugewiesen. Es wird ermittelt, ob die Seiten über ein Thumbnail verfügen. Ist dies nicht der Fall, so wird in Reaktion auf die Seiten ein Thumbnail erzeugt. Die Seitenoptionen werden dem Thumbnail zugewiesen. Das Thumbnail wird mit der mindestens einen Seite gespeichert.

Weitere Merkmale und Vorteile der vorliegenden Erfindung werden anhand der beigefügten, nachfolgend aufgeführten Zeichnungen näher erläutert. Die Komponenten der Figuren sind nicht zwangsläufig maßstabsgetreu, da besonderes Gewicht auf die Darstellung der Prinzipien der Erfindung gelegt wird. In den Figuren bezeichnen ähnliche Bezugszeichen einander entsprechende Teile.

Es zeigen:
- Fig. 1: ein Blockdiagramm einer Bilderzeugungsvorrichtung mit einer grafischen Benutzerschnittstelle, an der gemäß einer Ausführungsform der vorliegenden Erfindung Druckoptionen eines Druckauftrags auf Seitenebene dargestellt werden;
- Fig. 2: Darstellungen einer Ausführungsform von Icons;
- Fig. 3: Darstellungen einer Ausführungsform von Thumbnails;
- Fig. 4: ein Ablaufdiagramm eines ersten Verfahrens zur Darstellung von Druckoptionen an einer grafischen Benutzerschnittstelle einer Bilderzeugungsvorrichtung;
- Fig. 5: ein Ablaufdiagramm eines zweiten Verfahrens zur Darstellung von Druckoptionen an einer grafischen Benutzerschnittstelle einer Bilderzeugungsvorrichtung; und
- Fig. 6: ein Ablaufdiagramm eines dritten Verfahrens zur Darstellung von Druckoptionan an einer grafischen Benutzerschnittstelle einer Bilderzeugungsvorrichtung.

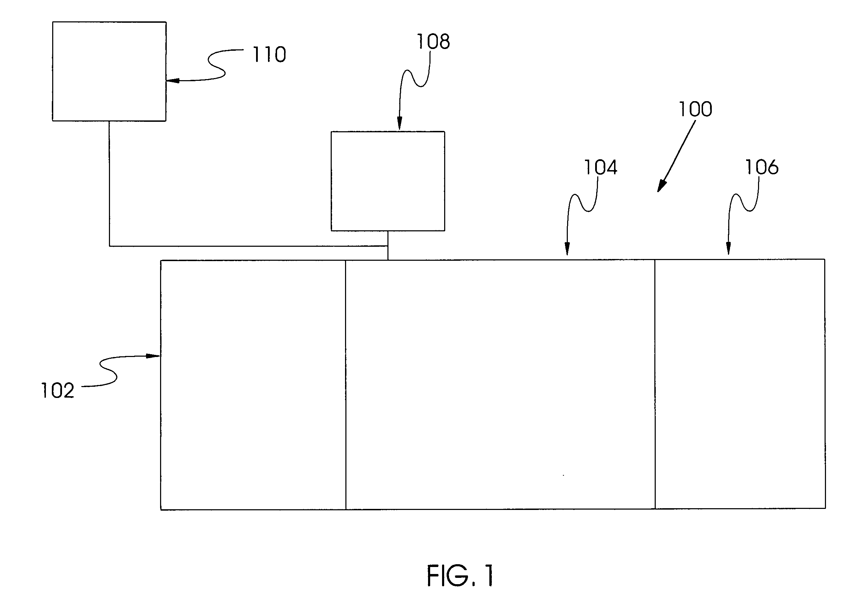

Fig. 1 zeigt ein Blockdiagramm einer Bilderzeugungsvorrichtung 100 mit einer grafischen Benutzerschnittstelle (GUI) 110, die gemäß einer ersten Ausführungsform eine Darstellung von Druckoptionen eines Druckauftrags auf Seitenebene ermöglicht. Wie nachfolgend beschrieben ist, umfasst die Darstellung der Druckoptionen für jede Seite mindestens eine grafische Darstellung der für die einzelnen Seiten ausgewählten oder den einzelnen Seiten zugeordneten Seitenoptionen. Die grafischen Darstellungen können z.B. als die Seitenoptionen anzeigendes Icon oder Thumbnail der Seite ausgebildet sein. Obwohl hier bestimmte Konfigurationen und Anordnungen gezeigt sind, können auch andere Konfigurationen und Anordnungen, z.B. auch mit anderen und zusätzlichen Komponenten, verwendet werden.

Die Bilderzeugungsvorrichtung 100 kann z.B. als eine elektrofotografische Vorrichtung ausgebildet sein, z.B. als ein Digimaster® Digitaldrucker, hergestellt von Heidelberg Digital L.L.C. in Rochester, New York. Die Bilderzeugungsvorrichtung 100 kann auch als eine andere elektrofotografische Maschine ausgebildet sein, als ein Fotokopiergerät, eine Druckvorrichtung o.ä. Zusätzlich zur GUI 110 umfasst die Bilderzeugungsvorrichtung 100 eine Zuführstation 102, eine Markiervorrichtung 104, eine Weiterverarbeitungsvorrichtung 106 und eine Druckerbenutzerschnittstelle 108. Die Bilderzeugungsvorrichtung 100 kann auch andere Elemente umfassen. Die Zuführstation 102, die Markiervorrichtung 104, die Weiterverarbeitungsvorrichtung 106 und die Druckerbenutzerschnittstelle 108 können als separate oder integrierte Komponenten ausgebildet sein. Die Druckerbenutzerschnittstelle 108 kann als eine Anzeigeeinheit ausgebildet sein, die Tasten oder sonstige Aktiviermechanismen zur Eingabe von Steuerungsparametern in die Bilderzeugungsvorrichtung 100 aufweist.

Die Zuführstation 102 leitet die Druck- oder Kopierbogen an die Druckvorrichtung 104. Bei den Bogen kann es sich um Papier, Folie oder andere Medien sowie um eine Kombination mehrerer Medien halten. Die Bogen können auch vorgelocht sein oder ein Register o.ä. aufweisen. Gemäß einem Aspekt umfasst die Markiervorrichtung 104 ein (nicht gezeigtes) Fotoleiterelement, mindestens eine (nicht gezeigte) Ladevorrichtung, eine (nicht gezeigte) Belichtungsvorrichtung, eine (nicht gezeigte) Tonerstation und eine (nicht gezeigte) Fixierstation. Im Betrieb wird das Fotoleiterelement selektiv geladen und optisch belichtet, so dass auf der Oberfläche ein latentes elektrostatisches Bild entsteht. Auf die Oberfläche des Fotoleiterelements wird Toner aufgetragen. Dieser ist geladen und haftet daher in den dem latenten elektrostatischen Bild entsprechenden Bereichen auf der Oberfläche des Fotoleiterelements. Das Tonerbild wird auf den Bogen übertragen. In der Fixierstation wird der Bogen erwärmt, damit der Toner auf dem Papier oder sonstigen Medium fixiert wird bzw. haftet. Der Bogen verlässt die Markiervorrichtung 104 und läuft in die Weiterverarbeitungsvorrichtung 106 ein, die den Bogen auslegen kann, wie er ist, oder eine bzw. mehrere Weiterverarbeitungsvorgänge durchführt, z.B. die Bogen heftet, falzt oder einen Bogen einfügt.

Gemäß einem Aspekt ist die GUI 110 als eine separate Komponente ausgebildet, z.B. ein auf die Vorrichtung zugeschnittener Desktop- oder sonstiger PC, der in Betriebsverbindung mit der Bilderzeugungsvorrichtung 100 steht. Die GUI 110 kann auch in die Druckerbenutzerschnittstelle 108 oder in andere Komponenten der Bilderzeugungsvorrichtung 100 integriert sein. Die GUI 110 steht in Betriebsverbindung mit der (nicht gezeigten) logischen Steuerungseinheit der Bilderzeugungsvorrichtung 100. Eine Betriebsverbindung bedeutet, dass Übertragungs- oder Kommunikationsmittel vorgesehen sind, z.B. eine elektrische Verbindung, eine Radioverbindung, eine Netzwerkverbindung o.ä. Die GUI 110 und die logische Steuerungseinheit können in dieselbe Komponente integriert sein. Die logische Steuerungseinheit ist zur Steuerung der Zuführstation 102, der Markiervorrichtung 104, der Weiterverarbeitungsvorrichtung 106 und der Druckerbenutzerschnittstelle 108 mit diesen verbunden. Die GUI 110 umfasst einen Bildschirm und ein Schnittstellenelement, z.B. einen (nicht gezeigten) Touchscreen, eine (nicht gezeigte) Tastatur, eine (nicht gezeigte) Maus, einen (nicht gezeigten) Trackball oder eine Kombination mehrerer dieser Elemente. Die GUI 110 kann Tear-off Menüs, Floating Buttons, Dialogfelder und Tastaturbefehle abwechselnd mit Maus-Shortcuts sowie sonstige alternative physische Eingabevorrichtungen aufweisen.

Die GUI 110 ermöglicht eine visuelle Interaktion mit der Bilderzeugungsvorrichtung 100 über eine Dokumentmanagementfunktionalität und eine Bilderzeugungsmanagementfunktionalität, die gemäß einem Aspekt in die GUI 110 integriert sind. Die Dokument- und Bilderzeugungsmanagementfunktionalität können teilweise oder vollständig in die logische Steuerungseinheit oder eine andere Komponente der Bilderzeugungsvorrichtung 100 integriert sein. Gemäß einem Aspekt werden die Dokument- und Bilderzeugungsmanagementfunktionalität über eine Plug-in-Architektur umgesetzt. Eine Plug-in-Architektur bietet die Möglichkeit, auf einfache und effiziente Weise Erweiterungen und Updates vorzunehmen, ohne dass die die Funktionalitäten ausführenden Programmcodes neu kompiliert werden müssen. Es können jedoch auch andere Architekturen verwendet werden.

Die Dokumentmanagementfunktionalität stellt über ein zentrales Anzeigefenster zur Anzeige elektronischer Bilder der Originalvorlage eines Druckauftrags bereit. Gemäß einem Aspekt wird die Dokumentanzeigefunktionalität von dem Softwareprogramm Adobe Acrobat, Version 5.0, hergestellt von Adobe Systems, Inc. in San Jose, Kalifornien, bereitgestellt. Es können jedoch auch andere Dokumentanzeigesoftwareanwendungen verwendet werden.

Die Bilderzeugungsmanagementfunktionalität integriert Anwendungen zur Ausführung, Steuerung oder zum Management der Bilderzeugungsvorrichtung 100 bereit. Die Bilderzeugungsmanagementfunktionalität stellt Objekte (Dokumente, Tickets, sonstige Einheiten, Vorgänge usw.), in Form von Icons, Baumstrukturen und Pull-down-Menüs, visuell dar. Ein Benutzer kann über verschiedene Interaktionsmittel wie einen Touchscreen, eine Maus, ein Trackball und eine Tastatur mit der Bilderzeugungsmanagementfunktionalität interagieren. Jede Interaktion mit den visuellen Darstellungen führt zu einer Veränderung der zugrunde liegenden Objekte. Während die Bilderzeugungsmanagementfunktionalität eine objektorientierte Erscheinungsform aufweisen kann, kann die Umsetzung der Funktionalität durch eine objektorientierte Programmiersprache oder durch eine nicht-objektorientierte Programmiersprache erfolgen. Gemäß einem Aspekt wird die Bilderzeugungsmanagementfunktionalität durch ImageSmart® Document Mastering SmartBoard ™ bereitgestellt, die in Digimaster® Digitaldruckern von Heidelberg Digital L.L.C. in Rochester, New York, eingesetzt wird. Es können jedoch auch andere Bilderzeugungsmanagementsoftwareanwendungen verwendet werden.

Die GUI 110 ermöglicht eine Druckoptionsdarstellung mit einem oder mehreren grafischen Darstellungen der für jede Seite ausgewählten oder jeder Seite zugeordneten Seitenoptionen. Die grafischen Darstellungen können z.B. als Icons, Thumbnails oder als eine Kombination aus beidem ausgebildet sein. Die Icons und Thumbnails werden von der Bilderzeugungs- und Dokumentmanagementfunktionalität bereitgestellt. Icons sind softwareerzeugte Bilder, die für Originaldokumente stehen. Thumbnails sind kleinere Ansichten eines Originaldokuments in einem elektronischen Dateiformat. Gemäß einem Aspekt erzeugt die Bilderzeugungsmanagementfunktionalität die Icons und die Dokumentmanagementfunktionalität die Thumbnails. Gemäß einem Aspekt erzeugt die GUI 110 ein Icon und/oder Thumbnail für jede Seite, der eine Seitenoption zugewiesen ist. Gemäß einem weiteren Aspekt erzeugt die GUI 110 ein Icon und/oder Thumbnail für jede Seite.

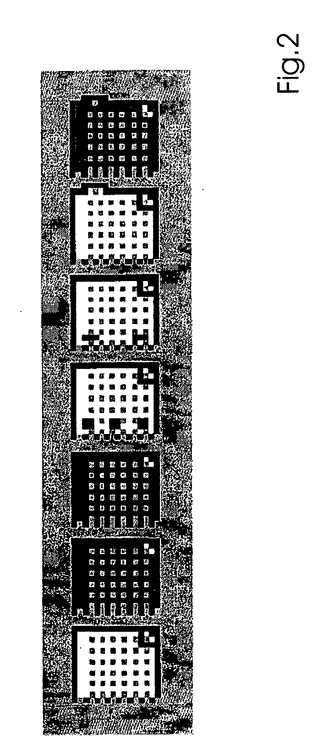

Fig. 2 zeigt eine Ausführungsform von Icons. Die gezeigten Icons stehen für die folgenden Seitenoptionen: keine besondere Option, rotes Medium, blaues Medium, Dreifachlochung, Zweifachheftung, Registermedium und rotes Registermedium mit Zweifachheftung. Jedes Icon kann eine oder mehrere Seitenoptionen darstellen. Es können auch andere oder zusätzliche Seitenoptionen verwendet werden. Aufgrund von Größenbeschränkungen kann jedes Icon auf die Darstellung einer Seitenoption beschränkt werden. Jedes Icon kann auch eine Eigenschaftsgruppe beschränkt werden (z.B. das Anzeigen einer zugewiesenen Hefteinstellung, jedoch nicht der spezifischen Hefteinstellung).

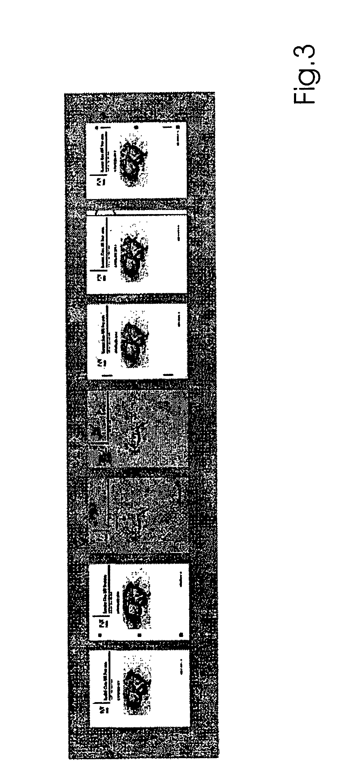

Fig. 3 zeigt eine Ausführungsform von Thumbnails. Die Thumbnails geben die folgenden Seitenoptionen wieder: keine besondere Option, Dreifachlochung, blaues Medium, rotes Medium, Zweifachheftung, Registermedium, Dreifachlochung mit Doppelheftung bei Druck auf der Rückseite. Es können auch andere oder zusätzliche Seitenoptionen verwendet werden. Gemäß einem Aspekt verändert die Bilderzeugungsmanagementfunktionalität in der GUI 110 Thumbnails von der Dokumentmanagementfunktionalität auf der Basis der Seitenoptionen für den Druckauftrag. Gemäß einem anderen Aspekt erzeugt die Bilderzeugungsmanagementfunktionalität die Thumbnails. Verschiedene Seitenoptionen können folgendermaßen dargestellt werden: farbiger Hintergrund für eine bestimmte Papierfarbe, dunkle Kreise für Lochungen, schwarze Markierungen für Heftpositionen, ein an das Papier angefügter Überhang für Registereinlagen, und eine generische Markierung für alle anderen Druckoptionen auf Seitenebene (z.B. eine Bildverschiebung, Falzen, versetztes Stapeln, zu bedruckende Seite, Kantenbeschnitt, Drehung und eine andere Ausgabevorrichtung usw.).

Gemäß einem weiteren Aspekt werden die veränderten Thumbnails erzeugt, wenn die Druckoptionen auf Seitenebene zugewiesen oder verändert werden. Das Thumbnail kann auch vor der Veränderung erneut erzeugt werden, um eine bessere Wiedergabe des Originaldokuments zu erhalten. Die automatisch erfolgende erneute Erzeugung von Thumbnails kann auch zur Leistungsverbesserung abgeschaltet werden. Das System behält eine Kopie des unveränderten Thumbnails, die zur Erzeugung der visuellen Darstellung der Druckoptionen auf Seitenebene verwendet wird.

Wenn Thumbnails für einen Duplex-Druckauftrag erzeugt werden, können die besonderen Markierungen und deren Position auf dem Thumbnail verändert werden, so dass sie in der korrekten Position für die Rückseite der Seite angezeigt werden. Wenn die Software bestimmt, dass eine Seite auf die Rückseite eines Papierbogens gedruckt werden wird, können die Lochund Heftmarkierungen an die rechte Kante des Thumbnails verschoben werden. Die Registermarke kann an die linke Kante bewegt werden.

Wenn mehrere Seitenoptionen gleichzeitig gewählt werden, können die Veränderungen in einer bestimmten Reihenfolge angewandt werden, damit alle Optionen auf dem Icon oder Thumbnail dargestellt werden. Gemäß einem Aspekt können Veränderungen der Papiergröße bzw. des Papierformats (z.B. Registerblätter) zuerst zugewiesen werden. Alle Veränderungen, die das Hinzufügen neuer Markierungen auf der Seite erfordern (z.B. Heftungen, Lochungen) werden als zweites zugewiesen. Veränderungen der Hintergrundfarbe werden zuletzt zugewiesen.

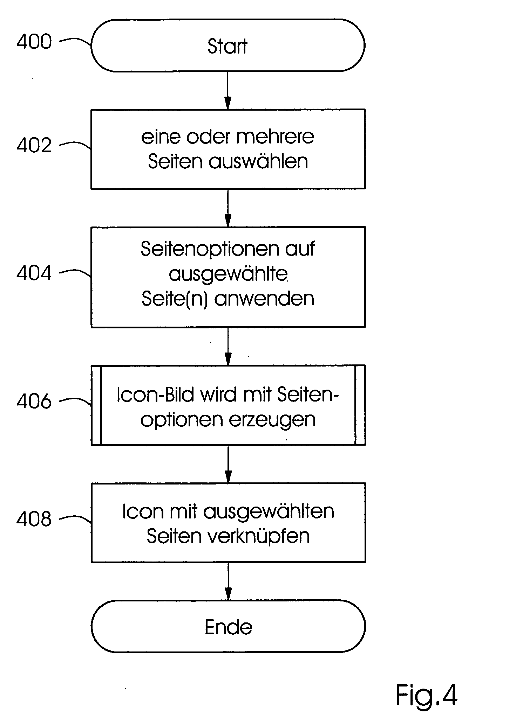

Fig. 4 zeigt ein Ablaufdiagramm eines ersten Verfahrens zur Darstellung von Druckoptionen in einer grafischen Benutzerschnittstelle einer Bilderzeugungsvorrichtung. Wie bereits beschrieben hat die grafische Benutzerschnittstelle eine Bilderzeugungsmanagementfunktionalität und eine Dokumentmanagementfunktionalität. Am Anfang öffnet die Dokumentmanagementfunktionalität in einem Schritt 400 eine Datei für einen Druckauftrag. In einem Schritt 402 wählt die Bilderzeugungsmanagementfunktionalität eine oder mehrere Seiten. Die Bilderzeugungsmanagementfunktionalität weist der/den ausgewählte/n Seite/n in einem Schritt 404 eine oder mehrere Seitenoptionen zu. Die Bilderzeugungsmanagementfunktionalität verwendet die Seitenoptionen zur Erzeugung eines Icons in einem Schritt 406. Es können z.B. dunkle Kreise und schwarze Linien hinzugefügt werden, die eine Lochung und eine Heftung andeuten. Die Farbe des Hintergrunds wird verändert, um die Farbe des zu verwendenden Papiers anzugeben. Die Bilderzeugungsmanagementfunktionalität verknüpft in einem Schritt 408 das Icon mit der/den gewählten Seite/n.

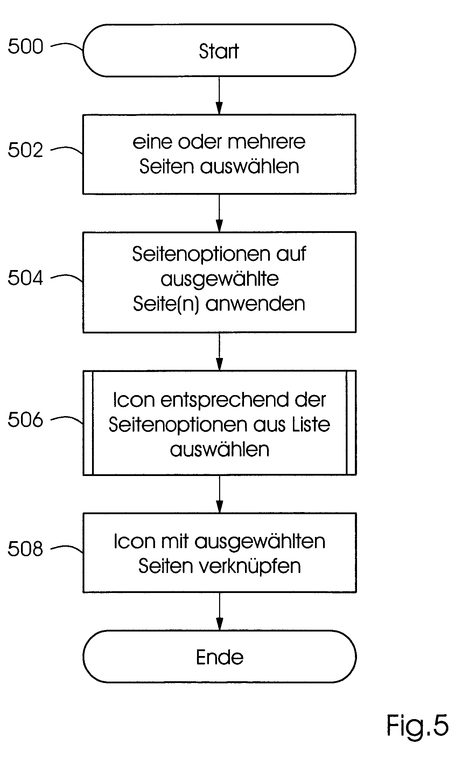

Fig. 5 zeigt ein Ablaufdiagramm eines zweiten Verfahrens zur Darstellung von Druckoptionen an einer grafischen Benutzerschnittstelle einer Bilderzeugungsvorrichtung. Wie bereits erläutert umfasst die grafische Benutzerschnittstelle eine Bilderzeugungsmanagementfunktionalität und eine Dokumentmanagementfunktionalität. Am Anfang öffnet die Dokumentmanagementfunktionalität in einem Schritt 500 eine Datei für einen Druckauftrag. In einem Schritt 502 wählt die Bilderzeugungsmanagementfunktionalität eine oder mehrere Seiten aus. Die Bilderzeugungsmanagementfunktionalität weist der/den ausgewählten Seite/n in einem Schritt 504 eine oder mehrere Seitenoptionen zu. In einem Schritt 506 wählt die Bilderzeugungsmanagementfunktionalität anhand der zugewiesenen Seitenoptionen ein den Seitenoptionen entsprechendes Icon aus einer Liste. Die Liste umfasst vordefinierte Icons, die den Seitenoptionen entsprechen. Die Seitenfarbe wird angewandt, um die Farbe des zu verwendenden Papiers anzuzeigen. Die Bilderzeugungsmanagementfunktionalität verknüpft das Icon in einem Schritt 508 mit der/den gewählten Seite/n.

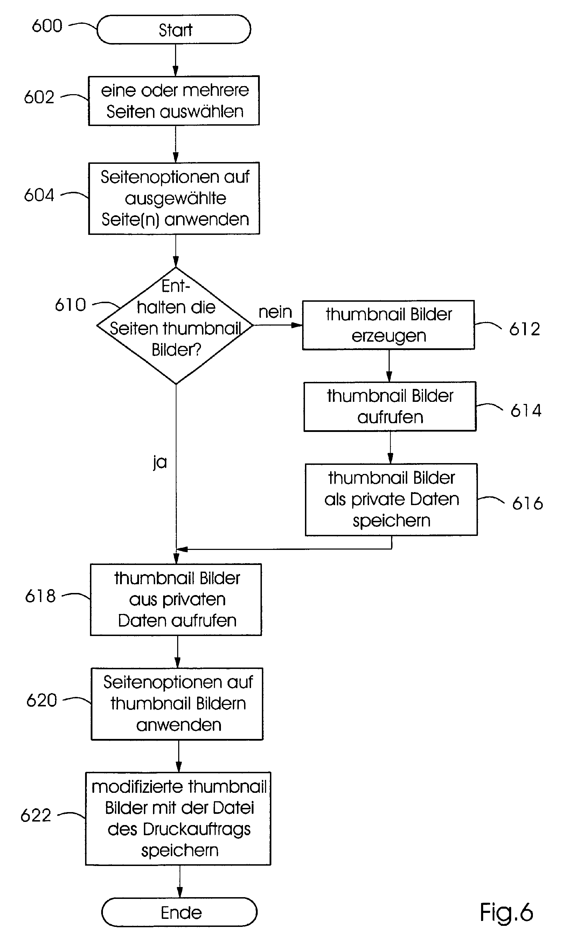

Fig. 6 zeigt ein Ablaufdiagramm eines dritten Verfahrens zur Darstellung von Druckoptionen an einer grafischen Benutzerschnittstelle einer Bilderzeugungsvorrichtung. Wie bereits erläutert umfasst die grafische Benutzerschnittstelle eine Bilderzeugungsmanagementfunktionalität und eine Dokumentmanagementfunktionalität. Am Anfang öffnet die Dokumentmanagementfunktionalität in einem Schritt 600 eine Datei für einen Druckauftrag. In einem Schritt 602 wählt die Bilderzeugungsmanagementfunktionalität eine oder mehrere Seiten aus. Die Bilderzeugungsmanagementfunktionalität weist in einem Schritt 604 der/den ausgewählten Seite/n eine oder mehrere Seitenoptionen zu. In einem Schritt 610 bestimmt die Dokumentmanagementfunktionalität, ob die gewählte/n Seite/n ursprüngliche Thumbnails enthalten. Wenn dies nicht der Fall ist, erzeugt die Dokumentmanagementfunktionalität in einem Schritt 612 ein ursprüngliches Thumbnail der gewählten Seite/n. Die Dokumentmanagementfunktionalität ruft in einem Schritt 614 die Thumbnails auf und speichert sie in einem Schritt 616 mit der/den gewählte/n Seite/n. Die Bilderzeugungsmanagementfunktionalität ruft in einem Schritt 618 die ursprünglichen Thumbnails auf und weist die Seitenoptionen in einem Schritt 620 den ursprünglichen Thumbnails zu. In einem Schritt 622 speichert die Bilderzeugungsmanagementfunktionalität die neuen/veränderten Thumbnails mit der Datei des Druckauftrags.

Es wurden verschiedene Ausführungsformen der Erfindung beschrieben und dargestellt. Die Beschreibung und Darstellungen dienen jedoch nur als Beispiele. Es sind im Rahmen der Erfindung auch andere Ausführungsformen und Umsetzungsweisen der vorliegenden Erfindung denkbar und dem Fachmann ersichtlich.

### Liste der Bezugszeichen

- 100: Bilderzeugungsvorrichtung
- 102: Zuführstation
- 104: Druckvorrichtung
- 106: Weiterverarbeitungsvorrichtung
- 108: Druckerbenutzerschnittstelle
- 110: grafische Benutzerschnittstelle
- 400: Verfahrensschritt
- 402: Verfahrensschritt
- 404: Verfahrensschritt
- 406: Verfahrensschritt
- 408: Verfahrensschritt
- 500: Verfahrensschritt
- 502: Verfahrensschritt
- 504: Verfahrensschritt
- 506: Verfahrensschritt
- 508: Verfahrensschritt
- 600: Verfahrensschritt
- 602: Verfahrensschritt
- 604: Verfahrensschritt
- 610: Verfahrensschritt
- 612: Verfahrensschritt
- 614: Verfahrensschritt
- 616: Verfahrensschritt
- 618: Verfahrensschritt
- 620: Verfahrensschritt
- 622: Verfahrensschritt

## Patentansprüche

1. Bilderzeugungsvorrichtung (100) mit einer grafischen Benutzerschnittstelle (110), einer Bilderzeugungsmanagementfunktionalität und einer Dokumentmanagementfunktionalität,
**dadurch gekennzeichnet,**
**dass** die Bilderzeugungsmanagementfunktionalität und/oder die Dokumentmanagementfunktionalität in Reaktion auf eine Seitenoption für einen Druckauftrag an der grafischen Benutzerschnittstelle (110) mindestens eine grafische Repräsentation bereitstellen.

2. Vorrichtung nach Anspruch 1,
**dadurch gekennzeichnet,**
**dass** es sich bei der grafischen Repräsentation um einen Icon handelt.

3. Vorrichtung nach Anspruch 1,
**dadurch gekennzeichnet,**
**dass** es sich bei der grafischen Repräsentation um einen Thumbnail handelt.

4. Verfahren zur Darstellung von Druckoptionen an einer grafischen Benutzerschnittstelle (110) einer Bilderzeugungsvorrichtung (100) mit den folgenden Schritten:
Auswählen mindestens einer Seite;
Zuweisen mindestens einer Seitenoption zu der mindestens einen Seite;
Bereitstellen einer grafischen Repräsentation in Reaktion auf die mindestens eine Seite; und
Zuweisen der mindestens eine Seitenoption zu der grafischen Repräsentation;

5. Verfahren nach Anspruch 4,
**dadurch gekennzeichnet,**
**dass** es sich bei der grafischen Repräsentation um einen Icon handelt.

6. Verfahren nach Anspruch 5,
**dadurch gekennzeichnet,**
**dass** der Verfahrensschritt des Bereitstellenes das Erzeugen des Icons umfasst.

7. Verfahren nach Anspruch 5,
**dadurch gekennzeichnet,**
**dass** der Verfahrensschritt des Bereitstellenes das Auswählen eines Icons entsprechend der Seitenoptionen aus einer Liste vorbestimmter Icons umfasst.

8. Verfahren nach Anspruch 4,
**dadurch gekennzeichnet,**
**dass** es sich bei der grafischen Repräsentation um einen Thumbnail handelt.

9. Verfahren nach Anspruch 8,
**dadurch gekennzeichnet,**
**dass** der Verfahrensschritt des Bereitstellenes folgende Verfahrensschritte umfasst:
Bestimmen, ob die mindestens eine Seite ein Thumbnail aufweist;
Erzeugen eines Thumbnails in Reaktion auf die mindestens eine Seite, wenn die mindestens eine Seite kein Thumbnail aufweist;

10. Verfahren nach Anspruch 9,
**dadurch gekennzeichnet,**
**dass** das Verfahren zusätzlich folgende Verfahrensschritte umfasst:
Verändern des Thumbnails in Reaktion auf die mindestens eine Seitenoption; und
Speichern des Thumbnails mit der mindestens einen Seite.
